# EUROPÄISCHE PATENTSCHRIFT

(11) **EP 1 935 526 B1**
(45) Veröffentlichungstag und Bekanntmachung des Hinweises auf die Patenterteilung: **08.07.2009**
(21) Anmeldenummer: 06405534.6
(22) Anmeldetag: 19.12.2006
(51) Int. Cl.: B21D 43/20, B23Q 7/10, B65G 60/00

(54) **Vorrichtung und Verfahren zum Be- und Entladen einer Bearbeitungsmaschine zum Bearbeiten von Platten**
Device and method for the loading and unloading of a machine for machining panels
Dispositif et procédé pour le chargement et déchargement d'une machine à usiner des panneaux

(43) Veröffentlichungstag der Anmeldung: 25.06.2008
(73) Patentinhaber: Bystronic Laser AG, 3362 Niederönz (CH)
(72) Erfinder: Jost, Stefan, 4556 Aeschi (CH); Messer, Jürg, 4515 Oberdorf (CH); Zimmerli, Jürg, 4932 Lotzwill (CH)
(74) Vertreter: EGLI-EUROPEAN PATENT ATTORNEYS

(56) Entgegenhaltungen:
- EP-A1- 0 919 320
- EP-A2- 0 780 172
- FR-A1- 2 842 754
- US-A1- 2003 147 729
- US-A1- 2004 240 980
- US-A1- 2005 072 767
- US-B1- 6 413 035
- US-B1- 6 609 875

## Beschreibung

Die Erfindung bezieht sich auf eine Vorrichtung und ein Verfahren zum Be- und Entladen einer Bearbeitungsmaschine zum Bearbeiten von Platten.

Unter dem Begriff Platte wird hier allgemein ein relativ dünner, flacher Gegenstand aus einem festen Material (beispielsweise Metall, Stein oder Holz) verstanden.

In der industriellen Fertigung werden Vorrichtungen und Verfahren zum Bearbeiten von Platten vielfältig eingesetzt, beispielsweise zum Schneiden, zum Beschichten oder zur Bearbeitung von Oberflächen von Platten. Um eine möglichst hohe Produktivität zu erreichen, werden zum Bearbeiten von Platten meist automatische Bearbeitungssysteme verwendet, die ausser einer Bearbeitungsmaschine für Platten auch eine automatische Vorrichtung zum Be- und Entladen der Bearbeitungsmaschine umfassen.

Bekannte Vorrichtungen zum Be- und Entladen umfassen in der Regel jeweils ein Speichersystem, welches einen ersten Speicherplatz für zu bearbeitende Platten und einen zweiten Speicherplatz für die von der Bearbeitungsmaschine bearbeiteten Platten umfasst, und eine Transporteinrichtung zum Transportieren der zu bearbeitenden Platten und zum Transportieren der bearbeiteten Platten zwischen dem Speichersystem und der Bearbeitungsmaschine.

Die Transporteinrichtung umfasst in der Regel mindestens einen Wechseltisch, auf dem eine zu bearbeitende Platte oder eine bearbeitete Platte Platz finden kann, wobei der jeweilige Wechseltisch zum Transport der Platten längs eines oder mehrerer vorbestimmter Wege zwischen dem Speichersystem und der Bearbeitungsmaschine transportierbar ist.

Der jeweilige Wechseltisch wird zum Beladen mit Platten in der Regel an einem vorbestimmten Ladeplatz gebracht. Zum automatischen Beladen ist gewöhnlich eine Beladevorrichtung vorgesehen, die dazu ausgebildet ist, eine zu bearbeitende Platte vom ersten Speicherplatz zu entfernen und an dem Ladeplatz auf dem jeweiligen Wechseltisch zu deponieren. Entsprechend kann ein mit einer bearbeiteten Platte beladener Wechseltisch an einem vorbestimmten Entladeplatz entladen werden. Zum automatischen Entladen ist gewöhnlich eine Entladevorrichtung vorgesehen, die dazu ausgebildet ist, eine bearbeitete Platte am Entladeplatz vom jeweiligen Wechseltisch zu entfernen und auf dem zweiten Speicherplatz zu deponieren.

Beim Design automatischer Bearbeitungssysteme werden in der Regel mehrere Optimierungskriterien berücksichtigt. Einerseits soll die Bearbeitungsmaschine einen grossen Durchsatz an Platten erzielen. Andererseits soll das Bearbeitungssystem einen möglichst geringen Platzbedarf haben, beispielsweise hinsichtlich der benötigten Grundfläche und/oder der beanspruchten Höhe in einem Raum. Weiterhin soll die Transporteinrichtung mit möglichst einfachen Mitteln eine an den Durchsatz der Bearbeitungsmaschine angepasste (hohe) Transportkapazität (beispielsweise charakterisiert als Anzahl der zwischen der Bearbeitungsmaschine und den jeweiligen Speicherplätzen transportierten Platten je Zeiteinheit) gewährleisten.

Um eine hohe Transportkapazität zu ermöglichen, wird ein Bearbeitungssystem meist mit mehreren Wechseltischen ausgestattet, die gleichzeitig zwischen der Bearbeitungsmaschine und den jeweiligen Speicherplätzen längs vorbestimmten Wegen zirkulieren können. Dadurch wird es beispielsweise möglich, einen (leeren) Wechseltisch mit einer zu bearbeitenden Platte zu beladen, während gerade eine andere Platte - auf einem anderen Wechseltisch liegend - von der Bearbeitungsmaschine bearbeitet wird oder eine bereits bearbeitete Platte von der Bearbeitungsmaschine in Richtung auf das Speichersystem bewegt wird.

Um die Zirkulation mehrerer Wechseltische zwischen der Bearbeitungsmaschine und dem Speichersystem zu erleichtern, werden automatische Bearbeitungssysteme meist mit einem sogenannten Wechseltisch-Wechsler vorgesehen. Ein Wechseltisch-Wechsler ist in der Regel eine Vorrichtung, die mindestens zwei verschiedene Führungsbahnen für Wechseltische umfasst, wobei die Führungsbahnen derart ausgelegt sind, dass ein zwischen dem Speichersystem und der Bearbeitungsmaschine zu transportierender Wechseltisch wahlweise entlang mindestens einer der jeweiligen Führungsbahnen des Wechseltisch-Wechslers bewegt werden kann. Konventionelle Wechseltisch-Wechsler ermöglichen es beispielsweise, dass ein erster Wechseltisch einen Platz auf einer Führungsbahn des Wechseltisch-Wechsler einnimmt, während ein anderer Wechseltisch über eine andere Führungsbahn in einer vorgegebenen Richtung an dem ersten Wechseltisch vorbeibewegt wird. Der Wechseltisch-Wechsler ermöglicht es beispielweise, dass mehrere Wechseltische zwischen der Bearbeitungsmaschine und dem Speichersystem in entgegengesetzten Richtungen - ohne gegenseitige Behinderung - bewegt werden können.

Typische Bearbeitungssysteme sind meist so konzipiert, dass ein Wechseltisch be- und/oder entladen werden kann, wenn der Wechseltisch einen Platz auf dem Wechseltisch-Wechsler einnimmt, d.h. in diesem Fall befindet sich der Ladeplatz und der Entladeplatz des Wechseltischs jeweils unmittelbar im Bereich des Wechseltisch-Wechslers.

Um die Grundfläche des Bearbeitungssystems weitgehend zu reduzieren, kann beispielsweise das Speichersystem so ausgelegt werden, dass die jeweiligen Speicherplätze für die zu bearbeitenden Platten und die bearbeiteten Platten übereinander angeordnet sind.

Hinsichtlich der Anordnung des Wechseltisch-Wechslers relativ zur Bearbeitungsmaschine und zum Speichersystem werden gewöhnlich mehrere Varianten in Betracht gezogen. Der Wechseltisch-Wechsler kann beispielsweise neben dem Speichersystem angeordnet werden, beispielsweise in einem Zwischenraum zwischen der Bearbeitungsmaschine und dem Speichersystem. Gemäss einer anderen Variante ist vorgesehen, den Wechseltisch-Wechsler auf einer Ebene mit der Bearbeitungsmaschine und das Speichersystem unmittelbar oberhalb des Wechseltisch-Wechslers anzuordnen. Die letztere Variante hat gegenüber der davor genannten Variante den Vorteil, dass der Wechseltisch-Wechsler und das Speichersystem gemeinsam eine besonders geringe Grundfläche beanspruchen, aber auch den Nachteil, dass der Wechseltisch (wegen der Anordnung des Speichersystems) nicht leicht zugänglich ist.

Für den Fall, dass der jeweilige Ladeplatz und der jeweilige Entladeplatz der Platten auf dem Wechseltisch-Wechsler vorgesehen sind, haben beide vorstehend genannten Varianten den Nachteil, dass Platten sowohl beim Beladen und als auch beim Entladen eines Wechseltischs jeweils über relativ lange und in der Regel krummlinige Wege sowohl horizontal als auch vertikal bewegt werden müssen. Aus diesem Grund ist der Transport der Platten zwischen dem Ladeplatz bzw. dem Entladeplatz und den jeweiligen Speicherplätzen mit komplexen, meist dreidimensionalen Bewegungen der Platten verbunden.

Die Konstruktionen der Beladevorrichtung und/oder Entladevorrichtung sind dementsprechend kompliziert. Weiterhin ist eine aufwändige Steuerung der Bewegungsabläufe erforderlich.

Ein weiterer Nachteil ist darin zu sehen, dass das Beladen und das Entladen von Wechseltischen zeitaufwändig sein kann, wenn der Ladeplatz und der Entladeplatz der Wechseltische jeweils am Wechseltisch-Wechsler, d. h. im Wesentlichen an demselben Ort, vorgesehen sind. In diesem Fall können beispielsweise mehrere Wechseltische nicht zu beliebigen Zeitpunkten beladen bzw. entladen werden, da der Transport der Wechseltische, der zu bearbeitenden Platten und der bearbeiteten Platten entsprechend koordiniert werden muss. Gleichzeitiges Entladen und Beladen von verschiedenen Wechseltischen sind in der Regel nicht möglich. Dies beeinträchtigt die Transportkapazität der Transportvorrichtung.

So zeigt die Druckschrift EP 0 780 172 eine Bearbeitungsmaschine mit einem Speicherplatz für unbearbeitete Platten, einem über diesem Speicherplatz angeordneten Speicherplatz für bearbeitete Platten und einem Wechseltisch für die unbearbeiteten Platten und die bearbeiteten Platten. Der Wechseltisch befindet sich beim Entladen, d.h. beim Deponieren der bearbeiteten Platte auf dem Speicherplatz, oberhalb des Speicherplatzes für bearbeitete Platten.

Der vorliegenden Erfindung liegt die Aufgabe zugrunde, die genannten Nachteile zu vermeiden, und eine Vorrichtung und ein Verfahren zum Be- und Entladen einer Bearbeitungsmaschine zum Bearbeiten von Platten zu schaffen, welche das Be- und Entladen von Wechseltischen vereinfachen und den Zeitaufwand beim Be- und Entladen reduzieren.

Diese Aufgabe wird gelöst durch eine Vorrichtung mit den Merkmalen des Patentanspruchs 1 und ein Verfahren mit den Merkmalen des Patentanspruchs 14.

Die erfindungsgemässe Vorrichtung zum Be- und Entladen einer Bearbeitungsmaschine zum Bearbeiten von Platten weist ein Speichersystem, welches einen ersten Speicherplatz für zu bearbeitende Platten und einen zweiten Speicherplatz für die von der Bearbeitungsmaschine bearbeiteten Platten umfasst, und eine Transporteinrichtung zum Transportieren der zu bearbeitenden Platten und zum Transportieren der bearbeiteten Platten zwischen dem Speichersystem und der Bearbeitungsmaschine auf. Die Transporteinrichtung umfasst mindestens einen Wechseltisch für mindestens eine zu bearbeitende Platte oder eine bearbeitete Platte, eine Beladevorrichtung zum Beladen des Wechseltischs und eine Entladevorrichtung zum Entladen des Wechseltisohs, wobei der jeweilige Wechseltisch zwischen dem Speichersystem und der Bearbeitungsmaschine transportierbar und jeweils an einen Ladeplatz und an einen Entladeplatz bringbar ist, die Beladevorrichtung dazu ausgebildet ist, eine zu bearbeitende Platte vom ersten Speicherplatz zu entfernen und an dem Ladeplatz auf dem jeweiligen Wechseltisch zu deponieren, und die Entladevorrichtung dazu ausgebildet ist, eine bearbeitete Platte am Entladeplatz vom jeweiligen Wechseltisch zu entfernen und auf dem zweiten Speicherplatz zu deponieren.

Gemäss der Erfindung ist der Entladeplatz des jeweiligen Wechsel tischs in einem Bereich über dem zweiten Speicherplatz vorgesehen.

Dies hat unter anderem zur Folge, dass der Entladeplatz räumlich vom Ladeplatz um eine grosse Distanz getrennt angeordnet sein kann, beispielsweise derart, dass ein erster Wechseltisch am Ladeplatz und ein zweiter Wechseltisch am Entladeplatz gleichzeitig zugänglich sind, so dass die beiden Wechseltische unabhängig voneinander, beispielsweise gleichzeitig, beladen bzw. entladen werden können. Letzteres setzt lediglich voraus, dass die Beladevorrichtung und die Entladevorrichtung zu diesem Zweck ausgebildet sind und entsprechend steuerbar sind. Auf diese Weise ist es möglich, Beladen und Entladen von mehreren Wechseltischen in unabhängigen, parallelen Prozessen durchzuführen. Die parallele Prozesoführung trägt zu einer Erhöhung der Transportkapazität der Transporteinrichtung bei.

Dadurch, dass der Entladeplatz des jeweiligen Wechseltischs in einem Bereich über dem zweiten Speicherplatz vorgesehen ist, ist weiterhin die Voraussetzung für eine konstruktive Vereinfachung der Transporteinrichtung und insbesondere der Entladevorrichtung gegeben. Unter der genannten Voraussetzung ist nämlich einerseits die Distanz zwischen dem Entladeplatz und dem zweiten Speicherplatz verhältnismässig kurz. Um einen Wechseltisch zu entladen, müssen die bearbeiteten Platten folglich mittels der Entladevorrichtung nur über eine kurze Distanz vom Entladeplatz zum zweiten Speicherplatz transportiert werden. Es ist auch möglich, die Entladevorrichtung so auszulegen, dass eine bearbeitete Platte beim Entladen lediglich längs eines geradlinigen Weges (d. h. in einer eindimensionalen Bewegung) bewegt werden muss. Eine derartige Entladevorrichtung ist mit besonders einfachen (konventionellen) Mitteln realisierbar und relativ einfach steuerbar.

In einer Ausführungsform der erfindungsgemässen Vorrichtung ist vorgesehen, dass eine auf dem jeweiligen Wechseltisch deponierte Platte am Entladeplatz mittels der Entladevorrichtung erfassbar, vom Wechseltisch separierbar und nach Entfernen des Wechseltisches auf dem zweiten Speicherplatz deponierbar ist. Zu diesem Zweck kann die Entladevorrichtung mit Erfassungsmitteln zum Erfassen der jeweils zu transportierenden Platten und einer Bewegungsvorrichtung zum Bewegen der Erfassungsmittel ausgestattet sein. Als Bewegungsvorrichtung für die Erfassungsmittel der Entladevorrichtung kann beispielsweise eine Hubvorrichtung vorgesehen werden, die eine eindimensionale Bewegung ermöglicht (beispielsweise in Richtung einer Vertikalen). Eine derartige Hubvorrichtung ist besonders einfach mit konventionellen Mitteln realisierbar. Ein weiterer Vorteil dieser Ausführungsform ist darin zu sehen, dass die Entladevorrichtung beim Entladen eines Wechseltisch nur wenig Platz beansprucht. Die Entladevorrichtung kann im Wesentlichen über dem zweiten Speicherplatz angeordnet werden und beansprucht in der Regel - in einer vertikalen Projektion auf den Speicherplatz bzw. den Boden - keine Grundfläche, die über die Grundfläche des Speichersystems hinausgeht.

Bei einer weiteren Ausführungsform der erfindungsgemässen Vorrichtung ist vorgesehen, dass mehrere Wechseltische innerhalb des automatischen Bearbeitungssystems zwischen der Bearbeitungsmaschine und dem Speichersystem zirkulieren können und abwechselnd beladen bzw. entladen werden. Zu diesem Zweck ist ein automatischer Wechseltisch-Wechsler vorgesehen, der zwischen der Bearbeitungsmaschine und dem Speichersystem angeordnet ist. Der Wechseltisch-Wechsler kann mit mindestens zwei Führungsbahnen ausgestattet sein, die jeweils zur Führung der Wechseltische dienen und temporär als Warteplatz für mindestens einen der Wechseltische verwendet werden können. Der Wechseltisch-Wechsler kann innerhalb des Bearbeitungssystems derart platziert sein, dass der jeweilige Wechseltisch zwischen dem Speichersystem und der Bearbeitungsmaschine auf mindestens einem Weg transportierbar ist, der über den Wechseltisch-Wechsler führt, wobei der jeweilige Weg des Wechseltischs wahlweise über eine der Führungsbahnen des Wechseltisch-Wechslers führt. Als Ladeplatz den jeweiligen Wechseltischs kann ein Platz im Bereich des Wechseltisch-Wechslers dienen, beispielsweise an einer der Führungsbahnen des Wechseltisch-Wechslers. Auf diese Weise ist eine räumliche Trennung zwischen dem Ladeplatz und dem Entladeplatz realisiert, die ausreicht, um in parallelen Prozessen einen Wechseltisch am Ladeplatz zu beladen und einen anderen Wechseltisch am Entladeplatz zu entladen.

Bei einer weiteren Ausführungsform der erfindungsgemässen Vorrichtung ist vorgesehen, dass der jeweilige Wechseltisch entlang einer Führung bewegbar ist, welche - von der Bearbeitungsmaschine aus gesehen - über den Wechseltisch-Wechsler hinaus zu einem Parkplatz für den Wechseltisch führt. Diese Führung kann beispielsweise an dem Speichersystem vorbeiführen und neben dem Speichersystem oder auf einer von der Bearbeitungsmaschine abgewandten Seite des Speichersystems Raum für den Parkplatz bieten. Auf dem Parkplatz kann ein einzelner Wechseltisch - unabhängig vom momentanen Betriebszustand des Bearbeitungssystems - einer speziellen Behandlung (manuelle Eingriffe eingeschlossen) unterzogen werden. Es ist beispielsweise möglich, einen von mehreren Wechseltischen, die während des Normalbetriebs des Bearbeitungssystems zwischen dem speichersystem und der Bearbeitungsmaschine zirkulieren, zum Parkplatz zu transportieren und dort für eine bestimmte Zeit in einer Ruhestellung zu lassen oder aus dem Bearbeitungssystem - automatisch oder manuell - zu entfernen. Weiterhin ist es möglich, dem Bearbeitungssystem (von aussen) über den Parkplatz einen Wechseltisch zuzuführen, indem dieser Wechseltisch am Parkplatz auf die genannte Führung gesetzt und anschliessend in Richtung der Bearbeitungsmaschine transportiert wird.

In einer Variante ist die Führung zwischen dem Wechseltisch-Wechsler und dem Parkplatz derart angeordnet, dass sie oberhalb eines der Speicherplätze vorbeiführt. Diese Variante ist besonders platzsparend.

In einer weiteren Ausführungsform der erfindungsgemässen Vorrichtung können Einzelteile von den jeweiligen Wechseltischen entfernt und auf einem (zusätzlichen) dritten Speicherplatz des Speichersystems deponiert werden. Diese Ausführungsform ist insbesondere nützlich im Falle von Plattenbearbeitungen, die auf einer Zerlegung von Platten in Einzelteile beruht (beispielsweise Stanzen von Blechen, Schneiden von Blechen oder Holzplatten). Bei derartigen Anwendungen ist es häufig erwünscht, eine Teilmenge der Einzelteile einer bearbeiteten Platte von den übrigen Einzelteilen der Platte zu separieren, um anschliessend diese übrigen Einzelteile (ohne die zuvor separierten Einzelteile) zusammen auf dem zweiten Speicherplatz deponieren zu können.

Das Separieren der Einzelteile kann beispielsweise mit Hilfe der Beladevorrichtung oder der Entladevorrichtung vorgenommen werden. Zu diesem Zweck muss die Beladevorrichtung bzw. die Entladevorrichtung derart ausgebildet sein, dass ausschliesslich die zu separierenden Einzelteile mittels der Vorrichtung erfassbar sind. Die zu separierenden Einzelteile können beispielsweise mittels der Beladevorrichtung von einem der Wechseltische entfernt werden, wenn sich der betreffende Wechseltisch am Ladeplatz befindet. Das Entfernen der Einzelteile kann demnach unabhängig vom Entladen eines Wechseltischs, d. h. ohne Mitwirkung der Entladevorrichtung, vorgenommen werden.

Weitere Einzelheiten der Erfindung und insbesondere beispielhafte Ausführungsformen der erfindungsgemässen Vorrichtung und des erfindungsgemässen Verfahrens werden im Folgenden anhand der beigefügten Zeichnungen erläutert. Es zeigen:
- Fig. 1: ein automatisches Bearbeitungssystem für Platten, mit einer Bearbeitungsmaschine für Platten und einer erfindungsgemässen Vorrichtung zum Be- und Entladen der Bearbeitungsmaschine, wobei in dem Bearbeitungssystem zwei Wechseltische für Platten zirkulieren und die Vorrichtung ein Speichersystem mit einem ersten und einem zweiten Speicherplatz für zu bearbeitende Platten und bearbeitete Platten und eine Beladevorrichtung zum Beladen der Wechseltische und eine Entladevorrichtung zum Entladen der Wechseltische umfasst;
- Fig. 2: das Bearbeitungssystem gemäss Fig. 1, wobei sich die Beladevorrichtung in einem anderen Betriebszustand befindet;
- Fig. 3,4: das Bearbeitungssystem gemäss Fig. 1, mit der Entladevorrichtung in zwei verschiedenen Betriebszuständen;
- Fig. 5-22: das Bearbeitungssystem gemäss Fig. 1, wobei verschiedene Betriebszustände dargestellt sind, die das Entladen (Fig. 5-14) und das Beladen (Fig. 15-19) eines Wechseltischs und das Beladen der Bearbeitungsmaschine (Fig. 20-22) bewirken;
- Fig. 23: eine weitere Ausführungsform des Bearbeitungssystems gemäss Fig. 1, mit einem zusätzlichen dritten Speicherplatz für zu entfernende Einzelteile und einer Vorrichtung zum Entfernen der Einzelteile;
- Fig. 24: eine weitere Ausführungsform des Bearbeitungssystems gemäss Fig. 1, mit einem zusätzlichen Parkplatz für einen Wechseltisch.

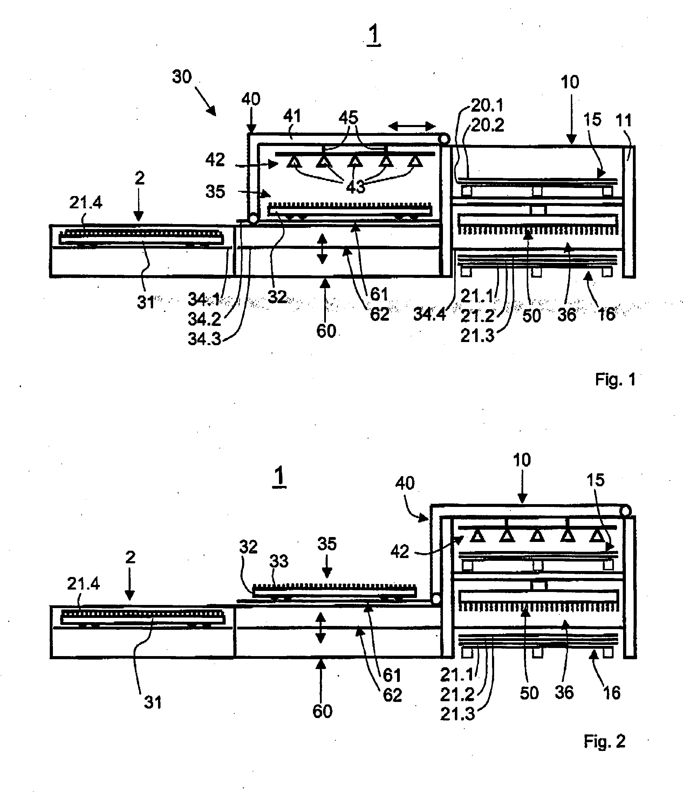

Fig. 1 zeigt ein automatisches Bearbeitungssystem 1 für Platten, welches eine Bearbeitungsmaschine 2 zum Bearbeiten von Platten, ein Speichersystem 10 für zu bearbeitende Platten und bearbeite Platten und eine Transporteinrichtung 30 zum Transportieren der zu bearbeitenden Platten und zum Transportieren der bearbeiteten Platten zwischen dem Speichersystem 10 und der Bearbeitungsmaschine 2 umfasst.

Die Bearbeitungsmaschine 2 kann beispielsweise eine Maschine zum Schneiden von Platten sein und zu diesem Zweck mit einem Schneidwerkzeug (beispielsweise einem mechanischen Schneidwerkzeug, einer Vorrichtung zum Laserschneiden, einer Vorrichtung zum Wasserstrahlochneiden, etc.) ausgestattet sein. Die Art der Plattenbearbeitung ist allerdings im Rahmen der Erfindung nicht relevant. Die vorliegenden Darstellungen des Bearbeitungssystems 1 enthalten deshalb keine Einzelheiten, die auf die Art der Bearbeitung bzw. einen konkreten Bearbeitungsvorgang hinweisen.

In den vorliegenden Darstellungen des Bearbeitungssystems 1 werden verschiedene von der Bearbeitungsmaschine 2 zu bearbeitende Platten mit 20.x (x=1, 2, ...) und Platten, die bereits von der Bearbeitungsmaschine 2 bearbeitet sind, mit 21.x (x=1, 2, ... ) gekennzeichnet.

Das Speichersystem 10 weist einen ersten Speicherplatz 15 für zu bearbeitende Platten 20.x und einen zweiten Speicherplatz 16 für bearbeitete Platten 21.x auf. Im vorliegenden Beispiel gemäss Fig. 1 befindet sich auf dem ersten Speicherplatz 15 ein Stapel von zwei zu bearbeitenden Platten 20.1 und 20.2 (wobei die Platte 20.2 ganz oben auf dem Stapel liegt) und auf dem zweiten Speicherplatz 16 ein Stapel von drei bearbeiteten Platten 21.1, 21.2 und 21.3 (wobei die Platte 21.3 ganz oben auf dem Stapel liegt).

Im vorliegenden Beispiel sind die Speicherplätze 15 und 16 übereinander in einem Rahmen 11 des Speichersystems 10 angeordnet, wobei der erste Speicherplatz 15 über dem zweiten Speicherplatz 16 liegt. Diese Anordnung der Speicherplätze 15 und 16 ist besonders platzsparend. Im Rahmen der Erfindung ist die relative Anordnung der Speicherplätze 15 und 16 allerdings nicht von besonderer Bedeutung (der erste Speicherplatz 15 könnte auch unter dem zweiten Speicherplatz 16 liegen ).

Die Transporteinrichtung 30 umfasst:
- Zwei Wechseltische (einen ersten Wechseltisch 31 und einen zweiten Wechseltisch 32), die jeweils Platz zur Ablage eines oder mehrerer Platten bieten;
- eine aus Paaren von Führungsschienen 34.1, 34.2, 34.3 und 34.4 (durch eine Aneinanderreihung dieser Führungsschienen) gebildete Führung für die Wechseltische (im vorliegenden Beispiel sind die Wechseltische 31 und 32 an den genannten Führungsschienen mittels Rollen geführt);
- einen (in den Figuren nicht dargestellten, konventionellen) Transportmechanismus zum Bewegen der Wechseltische 31 und 32 längs der Führungsschienen 34.1, 34.2, 34.3 und 34.4;
- einen Wechseltisch-Wechsler 60 mit einem ersten (oberen) Warteplatz 61 und einem zweiten (unteren) Warteplatz 62 für jeweils einen der Wechseltische 31 bzw. 32;
- eine Beladevorrichtung 40 zum Beladen der Wechseltische 31 und 32 und
- eine Entladevorrichtung 50 zum Entladen der Wechseltische 31 und 32.

Die Führungsschienen 34.1 sind in bzw.an der Bearbeitungsmaschine 2 angeordnet und sind derart ausgelegt, dass ein Wechseltisch auf ihnen Platz findet. Dieser Platz kann als Warteplatz für einen Wechseltisch genutzt werden: Im Betrieb des Bearbeitungssystems 1 kann hier ein Wechseltisch - mit einer zu bearbeitenden Platte beladen - in einer Wartestellung geparkt werden, in der die Platte - auf dem Wechseltisch liegend - von der Bearbeitungsmaschine 2 bearbeitet werden kann. Zur Illustration dieses Zustands ist in Fig. 1 der Wechseltisch 31 in einer Situation dargestellt, in der er mit einer bearbeiteten Platte 21.4 beladen ist und auf den Führungsschienen 34.1 eine Wartestellung einnimmt.

Der Wechseltisch-Wechsler 60 ist zwischen der Bearbeitungsmaschine 2 und dem Speichersystem 10 angeordnet. Der erste (obere) Warteplatz 61 ist auf den Führungsschienen 34.2 ausgebildet. Der zweite (untere) Warteplatz 62 ist auf den Führungsschienen 34.3 ausgebildet. Die beiden Führungsschienen 34.2 und 34.3 liegen - wie aus Fig. 1 ersichtlich - übereinander in verschiedenen, parallel zueinander ausgerichteten Ebenen, deren Abstand derart gross ist, dass auf den Warteplätzen 61 und 62 jeweils ein Wechseltisch (mit mindestens einer zu bearbeitenden Platte oder einer bearbeiteten Platte beladen) Platz finden kann.

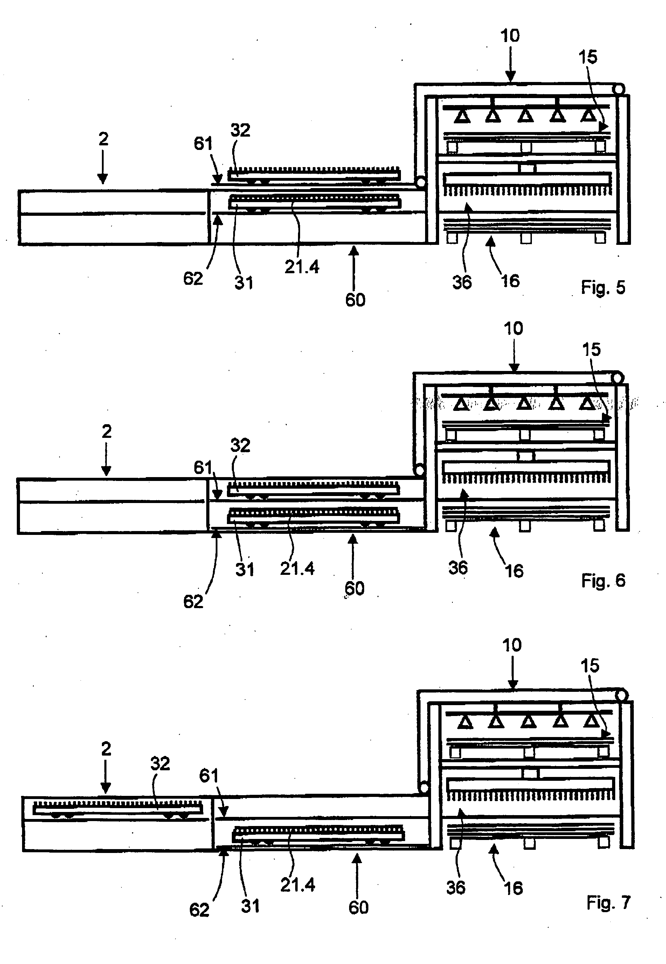

Die Führungsschienen 34.1 und 34.2 bzw. die Warteplätze 61 und 62 können gemeinsam mittels einer Hubeinrichtung, die in den Figuren nicht dargestellt ist, gehoben oder gesenkt werden (wie in Fig. 1 und 2 durch einen vertikalen Doppelpfeil angedeutet ist) und dabei zwischen einer oberen Stellung (Fig. 1, 2, 5) und einer unteren Stellung (Fig. 6, 7) bewegt werden. In der oberen Stellung der Führungsschienen 34.2 und 34.3 befinden sich die Führungsschienen 34.3 bzw. der zweite Warteplatz 62 auf demselben Niveau wie die Führungsschienen 34.1, so dass ein Wechseltisch stufenlos vom Warteplatz 62 des Wechseltisch-Wechslers 60 auf die Führungsschienen 34.1 im Bereich der Bearbeitungsmaschine 2 (und umgekehrt) gelangen kann. In der unteren Stellung der Führungsschienen 34.2 und 34.3 befinden sich die Führungsschienen 34.2 bzw. der erste Warteplatz 61 auf demselben Niveau wie die Führungsschienen 34.1, so dass ein Wechseltisch stufenlos vom Warteplatz 61 des Wechseltisch-Wechslers 60 auf die Führungsschienen 34.1 im Bereich der Bearbeitungsmaschine 2 (und umgekehrt) gelangen kann.

Die Führungsschienen 34.4 sind derart im Bereich des Speichersystems 10 angeordnet, dass ein Wechseltisch auf den Führungsschienen 34.4 in einer Wartestellung über dem zweiten Speicherplatz 16 und unter dem ersten Speicherplatz 15 Platz finden kann. Die jeweilige Höhe der Führungsschienen 34.4 ist im vorliegenden Beispiel so gewählt, dass ein Wechseltisch vom zweiten Warteplatz 62 bzw. den Führungsschienen 34.3 stufenlos auf die Führungsschienen 34.4 (und umgekehrt) gelangen kann, wenn sich die Führungsschienen 34.2 und 34.3 in der oberen Stellung befinden. Weiterhin kann ein Wechseltisch vom ersten Warteplatz 61 bzw. den Führungsschienen 34.2 stufenlos auf die Führungsschienen 34.4 (und umgekehrt) gelangen kann, wenn sich die Führungsschienen 34.2 und 34.3 in der unteren Stellung befinden.

Die Anordnung der Führungsschienen 34.1, 34.2, 34.3 und 34.4 ermöglichen demnach eine Zirkulation von Wechseltischen zwischen den Führungsschienen 34.1 im Bereich der Bearbeitungsmaschine 2 und den Führungsschienen 34.3 im Bereich des Speichersystems 10 - je nach Stellung der Führungsschienen 34.2 und 34.3 im Bereich des Wechseltisch-Wechslers 60 - auf zwei verschiedenen Wegen.

Die Beladevorrichtung 40 ist so konzipiert, dass zu bearbeitende Platten von der Beladevorrichtung 40 am ersten Speicherplatz 15 des Speichersystems 10 erfasst und zu einem Ladeplatz 35, der sich über dem Wechseltisch-Wechsler 60 befindet, transportiert und dort auf einem Wechseltisch deponiert werden können.

Zur Illustration dieses Sachverhalts ist in Fig. 1 der Wechseltisch 32 in einer Wartestellung auf dem Ladeplatz 35 dargestellt.

Die Beladevorrichtung 40 umfasst:
- Einen in horizontaler Richtung bewegbaren Rahmen 41, welcher im vorliegenden Beispiel über Rollen einerseits auf dem Gestell 11 des Speichersystems 10 und andererseits auf dem Wechseltisch-Wechsler 60 gestützt ist, und einen (in den Figuren nicht dargestellten) Antrieb zum Bewegen des Rahmens 41 in horizontaler Richtung (wie in Fig. 1 durch einen Doppelpfeil am Rahmen 41 angedeutet ist);
- ein Saugsystem 42, das eine zweidimensionale Anordnung von Saugnäpfen 43 aufweist und dazu ausgebildet ist, Gegenstände durch Ansaugen mittels der Saugnäpfe 43 zu erfassen und zu halten, und
- eine erste Hubvorrichtung 45 zum Heben und/oder Senken des Saugsysteme 42.

Um einen Wechseltisch am Ladeplatz 35 beladen zu können, kann das Saugsystem 42 mittels des Rahmens 41 zunächst in eine Position über dem ersten Speicherplatz 15 gebracht werden (Fig. 2) und mittels der ersten Hubvorrichtung 45 auf eine am ersten Speicherplatz 15 deponierte (zu bearbeitende) Platte gesenkt werden, um diese mit den saugnäpfen 43 zu erfassen. Anschliessend kann eine erfasste Platte durch Anheben des Saugsystems 42 mittels der ersten Hubvorrichtung 45 vom ersten Speicherplatz 15 separiert werden, durch eine entsprechende Bewegung des Rahmens 41 zum Ladeplatz 35 transportiert und dort auf einem Wechseltisch deponiert werden.

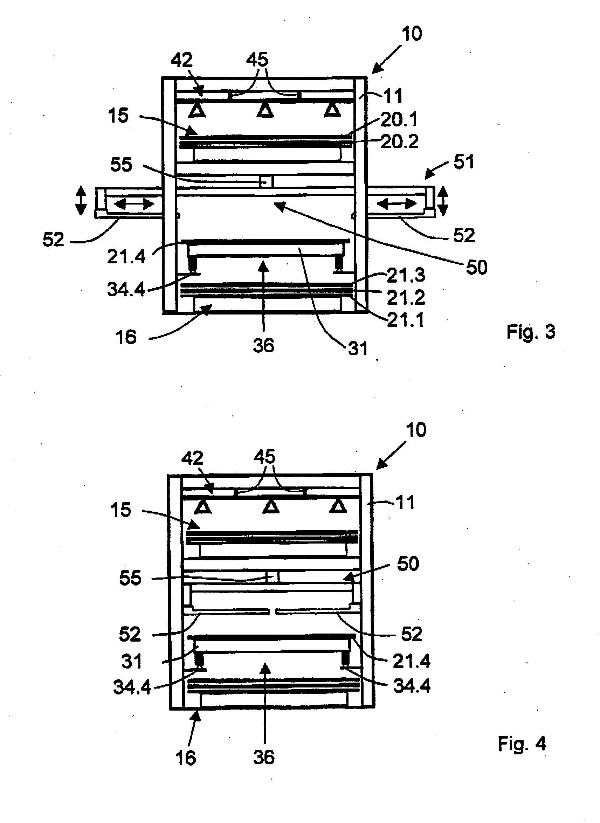

Die Entladevorrichtung 50 ist in Fig. 1 und 3 bzw. 4 aus verschiedenen Perspektiven und in Fig. 3 und 4 jeweils in verschiedenen Betriebszuständen dargestellt. Die Fig. 3 und 4 zeigen das in Fig. 1 dargestellte Bearbeitungssystem 1 in einer Sicht auf das Speichersystem 11 (im Vordergrund) in Richtung auf die Bearbeitungsmaschine 2, d. h. mit einem Blick entlang des Weges, den die Wechseltische 31 und 32 entlang der Führungsschienen 34.1, 34.2, 34.3 und 34.4 zurücklegen können.

Gemäss der Erfindung ist ein Entladeplatz 36 des Bearbeitungssystems 1 über dem zweiten Speicherplatz 16 vorgesehen. Zum Entladen wird ein mit einer Platte beladener Wechseltisch an den Entladeplatz 36 im Bereich der Führungsschienen 34.4 transportiert und in eine Wartestellung gebracht. Zur Illustration dieser Situation ist in Fig. 3 und 4 der Wechseltisch 31 zusammen mit der zu entfernenden bearbeiteten Platte 21.4 in seiner Wartestellung am Entladeplatz 36 dargestellt.

Die Entladevorrichtung 50 ist in einem Zwischenraum zwischen dem ersten Speicherplatz 15 und dem zweiten Speicherplatz 16 über dem Entladeplatz 36 untergebracht und umfasst im vorliegenden Beispiel:
- ein konventionelles Gabelsystem 51 mit zwei Gabeln 52, die einander gegenüberliegend angeordnet sind, und mit einem (in den Figuren nicht dargestellten) Antrieb zum Bewegen der Gabeln 52 in einer horizontalen Richtung (wie in Fig. 3 durch horizontale Doppelpfeile angedeutet ist) und
- eine zweite Hubvorrichtung 55 zum Heben und/oder Senken des Gabelsystems 51 (wie in Fig. 3 durch vertikale Doppelpfeile angedeutet ist).

Jede Gabel 52 hat eine Vielzahl von Zinken, deren spitze Enden horizontal und senkrecht zu den Führungsschienen 34.4 verlaufen und jeweils auf das Zentrum des Speichersystems 10 gerichtet sind. Die Gabeln 52 können simultan jeweils in entgegengesetzter Richtung parallel zur Horizontalen zwischen einer offen Stellung und einer geschlossenen Stellung bewegt werden. Die Fig. 3 zeigt das Gabelsystem 51 in der offenen Stellung: Der Abstand der Gabeln 52 ist in dieser Stellung maximal, d. h. grösser als die Breite der Platte 21.4, die von einem zu entladenden Wechseltisch 31 entfernt werden soll. Die Fig. 4 zeigt das Gabelsystem 51 in der geschlossenen Stellung: Der Abstand der Gabeln 52 ist in dieser Stellung minimal, d. h. geringer als die Breite der Platte 21.4, die von einem zu entladenden Wechseltisch 31 entfernt werden soll.

Um die Platte 21.4 vom Wechseltisch 31 in der Situation gemäss Fig. 3 mit der Entladevorrichtung 50 entfernen zu können, kann das Gabelsystem 51 in der offenen Stellung mittels der zweiten Hubvorrichtung 55 derart weit nach unten bewegt werden, bis die Gabeln 52 bei einem Übergang des Gabelsystems 51 in die geschlossene Stellung unter die Platte 21.4 geschoben werden können, um die Platte 21.4 von unten zu erfassen und zu stützen. Anschliessend kann die Platte 21.4 durch Anheben des Gabelsystems 51 mittels der zweiten Hubvorrichtung 55 vom Wechseltisch 31 separiert werden.

Um zu erreichen, dass Platten, die auf einem der Wechseltische 31 bzw. 32 abgelegt sind, ohne Beschädigung mit den Gabeln 52 erfasst werden können, ist auf der Oberseite jedes Wechseltischs 31, 32 jeweils einen Rost 33 (siehe Fig. 2) als Unterlage für die zu transportierenden Platten angebracht. Der Rost 33 weist an seiner Oberseite horizontale Rillen auf, die derart ausgebildet sind, dass die Zinken der Gabeln 52 beim Übergang in die geschlossene Stellung in die genannten Rillen geführt und dabei schonend unter eine auf dem Rost abgelegte Platte geschoben werden können.

Die Fig. 2 und 5-22 zeigen das automatische Bearbeitungssystem 1 in einem Zyklus von Betriebszuständen, der als ein Beispiel für den Ablauf eines Verfahrens zum Beladen und Entladen der Bearbeitungsmaschine 2 gemäss der Erfindung angesehen werden kann. Der Ablauf des Verfahrens wird von einer Steuervorrichtung gesteuert, die in den Fig. 1-22 nicht dargestellt ist.

Die Fig. 2 und 5-22 zeigen die Wechseltische 31 und 32 auf verschiedenen Stationen während einer Zirkulation zwischen der Bearbeitungsmaschine 2 und dem Speichersystem 10 längs der Führungsschienen 34.1, 34.2, 34.3 und 34.4, wobei die Wechseltische 31 und 32 mittels der Beladevorrichtung 40 beladen bzw. mittels der Entladevorrichtung 50 entladen werden können. Der Übersichtlichkeit halber wird lediglich das Entladen und Beladen des Wechseltischs 31 gezeigt, der Wechseltisch 32 wird immer im unbeladenen Zustand dargestellt.

Fig. 2 zeigt das Bearbeitungssystem 1 an einem Ausgangspunkt des Zyklus: Der Wechseltisch 31 befindet sich in der Bearbeitungsmaschine 2 in einer Wartestellung, ist beladen mit der bearbeiteten Platte 21.4 und bereit zum Weitertransport zum Speichersystem 10. Der Wechseltisch 32 befindet sich zurzeit auf dem ersten (oberen) Warteplatz 61 des Wechseltisch-Wechslers 60, während der untere Warteplatz 62 des Wechseltisch-Wechslers 60 leer ist. Die Warteplätze 61 und 62 nehmen jeweils die obere Stellung ein.

Die Fig. 5-14 zeigen den Transport des Wechseltischs 31 zum Speichersystem 10 und das Entladen des Wechseltischs 31.

Im ersten Schritt des Zyklus (Fig. 5) verlässt der Wechseltisch 31 mit der bearbeiteten Platte 21.4 die Bearbeitungsmaschine 2. Er wird auf den zweiten Warteplatz 62 des Wechseltisch-Wechslers 60 bewegt. Beide Warteplätze 61 und 62 sind nun mit einem der Wechseltische 31 bzw. 32 belegt. Anschliessend werden beide Warteplätze 61 und 62 abgesenkt und nehmen jeweils die untere Stellung ein (Fig. 6).

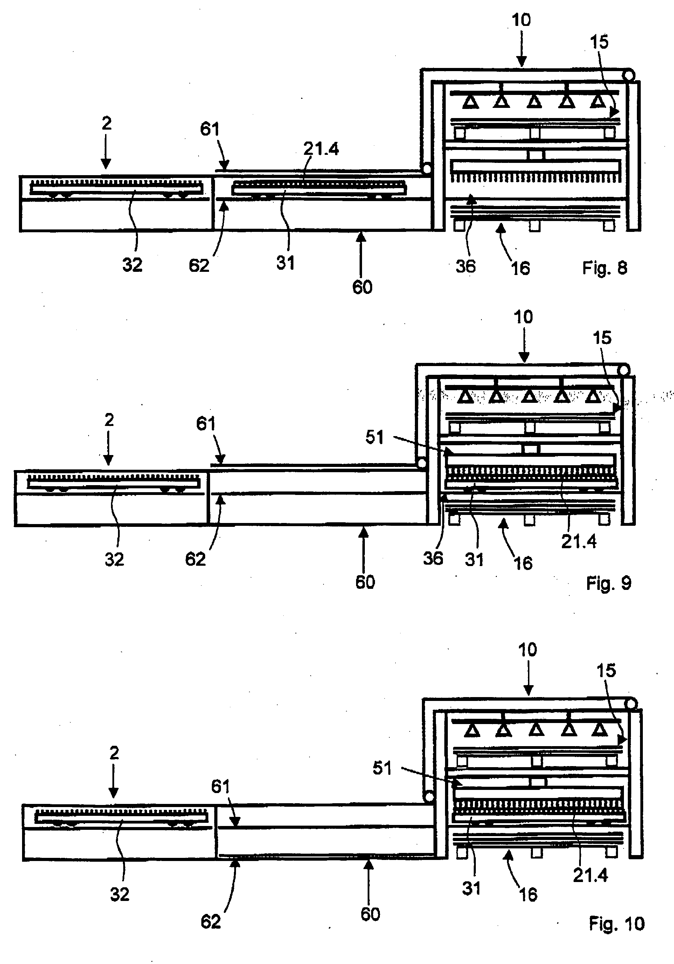

Im nächsten Schritt des Zyklus (Fig. 7) wird der Wechseltisch 32 vom ersten Warteplatz 61 in die Bearbeitungsmaschine 2 transportiert. Anschliessend werden die Warteplätze 61 und 62 in die obere Stellung bewegt (Fig. 8).

Im nächsten Schritt des Zyklus (Fig. 9) wird der Wechseltisch 31 - erfindungsgemäss - vom zweiten Warteplatz 62 auf den Entladeplatz 36 über dem zweiten Speicherplatz 16 befördert. Das Gabelsystem 51 nimmt zurzeit die offene Stellung ein und ist derart platziert, dass durch Schliessen des Gabelsystems 51 die bearbeitete Platte 21.4 erfasst werden kann.

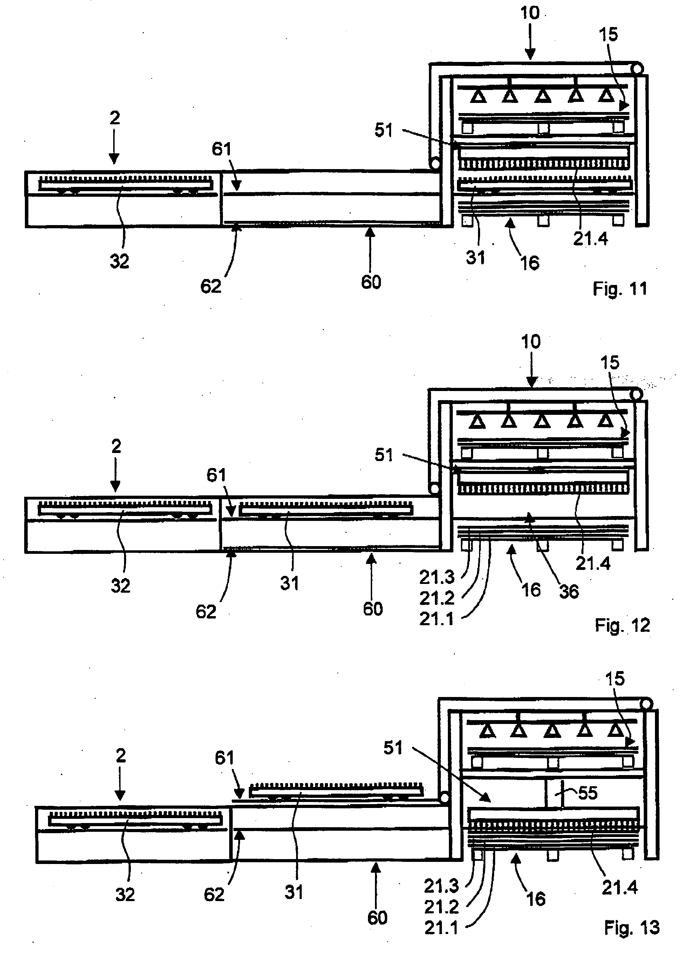

Im nächsten Schritt des Zyklus (Fig. 10) geht das Gabelsystem 51 in die geschlossene Stellung über, um die bearbeitete Platte 21.4 zu erfassen. Weiterhin werden die Warteplätze 61 und 62 jeweils in die untere Stellung gebracht. Anschliessend wird das Gabelsystem 51 zusammen mit der bearbeiteten Platte 21.4 gehoben (Fig. 11). Die bearbeite Platte 21.4 ist somit von dem Wechseltisch 31 separiert.

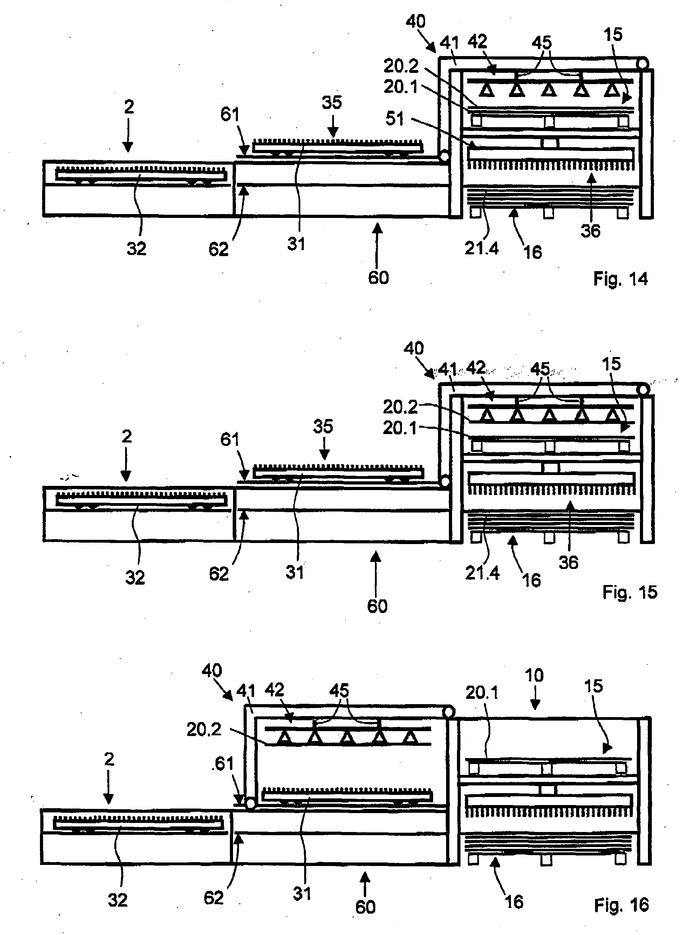

Im nächsten Schritt des Zyklus (Fig.12) wird der nun entladene Wechseltisch 31 vom Entladeplatz 36 über dem zweiten Speicherplatz 16 entfernt und zum ersten Warteplatz 61 des Wechseltisch-Wechslers 60 transportiert. Anschliessend wird das Gabelsystem 51 mittels der zweiten Hubvorrichtung 55 gesenkt und die bearbeitete Platte 21.4 auf dem zweiten Speicherplatz 16 deponiert (Fig. 13). Das Gabelsystem 51 wird zu diesem Zweck geöffnet. Im vorliegenden Beispiel liegt die bearbeite Platte 21.4 nun auf der Platte 21.3. Weiterhin werden die Warteplätze 61 und 62 jeweils in die obere Stellung gebracht. Anschliessend wird das Gabelsystem 51 wieder gehoben. Der Ladeplatz 36 ist nun frei und bereit zur Aufnahme des nächsten Wechseltischs (Fig. 14).

Die Fig. 15-19 zeigen - ausgehend von der in Fig. 14 dargestellten Situation - das Beladen des Wechseltischs 31 mit der zu bearbeitenden Platte 20.2, die am ersten Speicherplatz 15 zuoberst liegt.

Im vorliegenden Beispiel liegt der Ladeplatz 35 des Wechseltischs 31 auf dem ersten Warteplatz 61 des Wechseltisch-Wechslers 60 (Fig. 14, 15). Gemäss Fig. 14 ist zunächst das Saugsystem 42 über dem ersten Speicherplatz 15 angeordnet. Das Saugsystem 42 wird anschliessend mittels der ersten Hubvorrichtung 45 gesenkt, um die zu bearbeitende Platte 20.2 zu erfassen, und danach zusammen mit der Platte 20.2 gehoben. Die Platte 20.2 ist somit vom ersten Speicherplatz 15 separiert (Fig. 15).

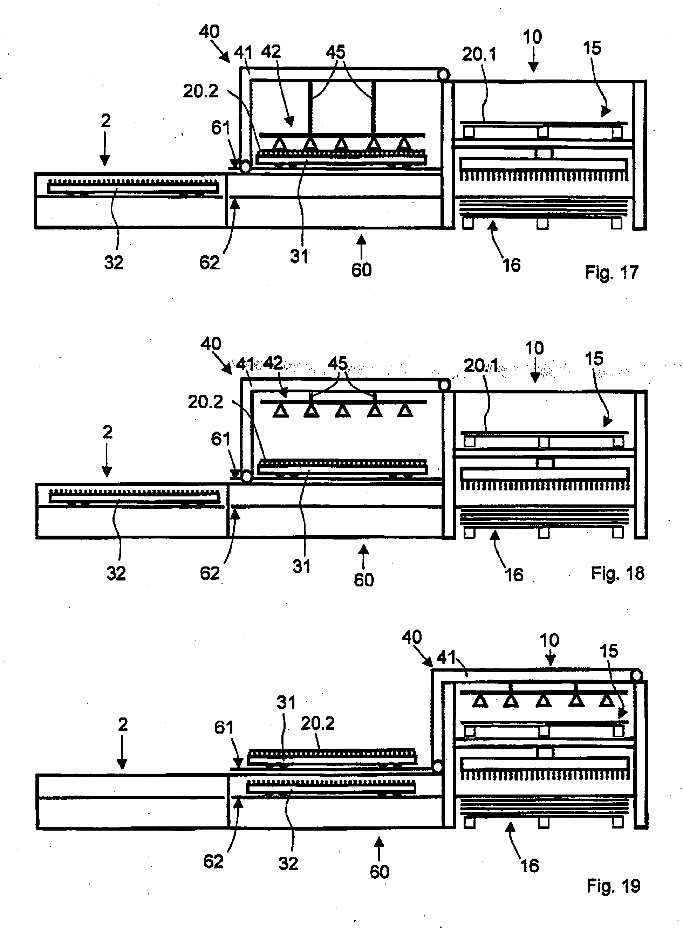

Im nächsten Schritt des Zyklus (Fig. 16) wird der Rahmen 41 der Beladevorrichtung 40 bewegt, bis sich die Platte 20.4 über dem Wechseltisch 31 befindet. Anschliessend werden das Saugsystem 42 mittels der ersten Hubvorrichtung 45 gesenkt, die Platte 20.2 auf dem Wechseltisch niedergelegt und vom Saugsystem 42 gelöst und das Saugsystem 42 wieder mittels der ersten Hubvorrichtung 45 gehoben (Fig. 18). Der Rahmen 41 wird dann bewegt, bis das Saugsystem 42 wieder über dem ersten Speicherplatz 15 platziert und somit zum Erfassen einer weiteren Platte bereit ist (Fig. 19). Ausserdem verlässt der Wechseltisch 32 die Bearbeitungsmaschine 2 und wechselt auf den zweiten Warteplatz 62 des Wechseltisch-Wechslers 60.

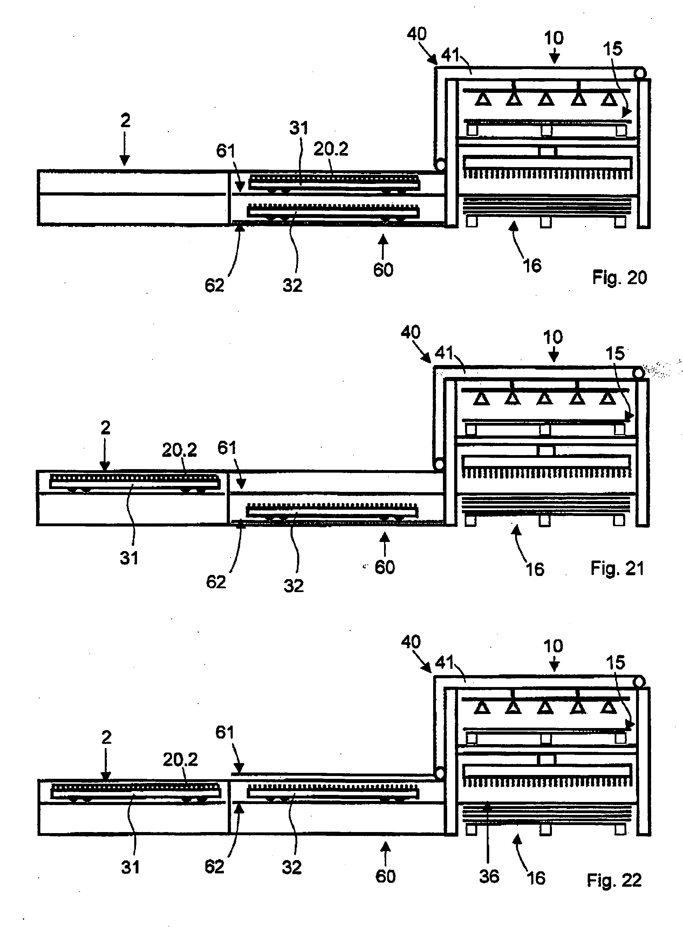

In den nächsten schritten des Zyklus wird die Bearbeitungsmaschine 2 beladen (Fig. 20-22). Zunächst werden die Warteplätze 61 und 62 in die untere Stellung gebracht. Der Wechseltisch 31 wird anschliessend zusammen mit der zu bearbeitenden Platte 20.2 in die Bearbeitungsmaschine 2 transportiert (Fig. 21). Anschliessend werden die Warteplätze 61 und 62 wieder in die obere Stellung gebracht. Der Wechseltisch 32 ist somit bereit, vom Wechseltisch-Wechsler 60 auf den Entladeplatz 36 über dem zweiten Speicherplatz 16 zu wechseln.

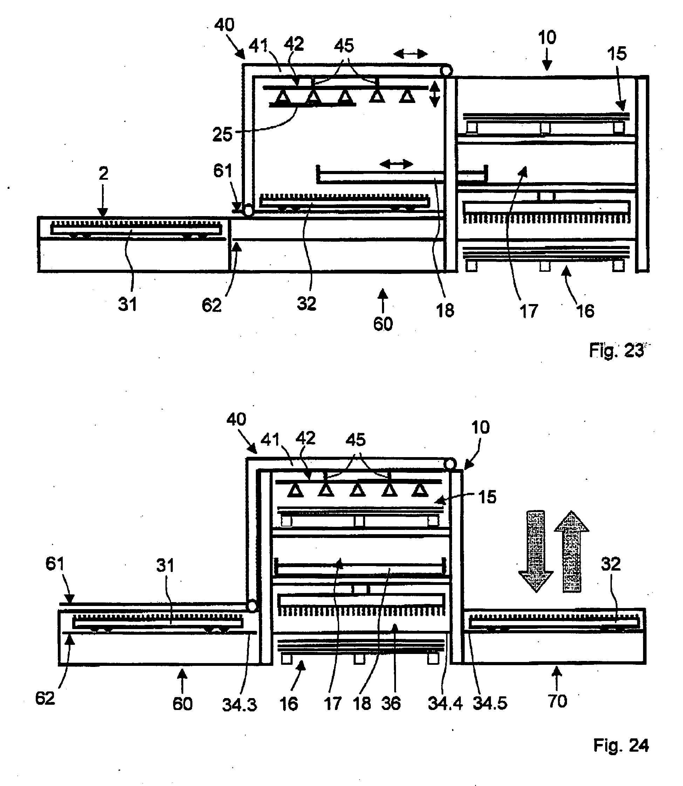

Fig. 23 zeigt eine Weiterentwicklung des in Fig. 1 dargestellten automatischen Bearbeitungssystems 1 und insbesondere des Speichersystems 10. Das Saugsystem 42 der Beladevorrichtung 40 mit seiner Vielzahl an Saugnäpfen ist geeignet, auch kleinere Einzelteile, deren Grösse nur einem Bruchteil der Grösse einer der Platten 21.x entspricht, zu erfassen und von einem der Wechseltische zu entfernen. Für den Fall, dass eine der bearbeiteten Platten 21.x eine in Einzelteile zerlegte Platte ist, ist es auch möglich, lediglich eine Teilmenge der Einzelteile mit der Beladevorrichtung 40 zu erfassen und von den übrigen Einzelteilen zu separieren, bevor diese übrigen Einzelteile anderweitig behandelt (z. B. auf dem zweiten Speicherplatz 16 deponiert) werden. Die Fig. 23 zeigt beispielsweise ein Einzelteil 25, welches mit Hilfe des Saugsystems 42 vom Wechseltisch 32 entfernt wurde. Zur Entsorgung bzw. Aufbewahrung derartiger Einzelteile ist ein dritter Speicherplatz 17 vorgesehen, der im Speichersystem 10 zwischen dem ersten Speicherplatz 15 und dem zweiten Speicherplatz 16 angeordnet ist. Der Speicherplatz 17 bietet Raum für eine ausfahrbare Schublade 18, die zumindest teilweise in einen Bereich zwischen dem Saugsystem 42 und dem Wechseltisch-Wechsler 60 bewegt werden kann und somit dafür geeignet ist, Einzelteile aufzunehmen, die mittels der Beladevorrichtung angehoben und in die ausgefahrene Schublade 18 abgelegt werden können.

Die Fig. 24 zeigt eine weitere Weiterentwicklung des in Fig. 1 dargestellten automatischen Bearbeitungssystems 1. Im vorliegenden Fall werden die Führungsschienen 34.4 auf der vom Wechseltisch-Wechsler 60 abgewandten Seite des Speichersystems 10 geradlinig und stufenlos fortgesetzt durch entsprechende Führungsschienen 34.5. Die Führungsschienen 34.5 sind Bestandteil eines Parkplatzes 70 für einen Wechseltisch. Im Beispiel gemäss Fig. 24 ist der Wechseltisch 32 auf dem Parkplatz 70 abgestellt.

Es ist vorgesehen, dass ein Wechsel tisch an dem Parkplatz 70 von den Führungsschienen 34.5 entfernt werden kann, und/oder dass ein von den Führungsschienen 34.5 entfernter Wechseltisch derart in Kontakt mit den Führungsschienen 34.5 gebracht werden kann, dass er entlang der Führungsschienen 34.5 bewegbar ist.

Wenn ein Wechseltisch sich im Bereich des Parkplatzes 70 befindet, dann besteht beispielsweise die Gelegenheit dafür, einen Rost 33 oder einen Einsatz oder eine Auflage zur Ablage von mindestens einer der Platten 20.x bzw. 21.x am jeweiligen Wechseltisch zu installieren, vom Wechseltisch zu entfernen oder am Wechseltisch auszuwechseln.

## Patentansprüche

1. Vorrichtung zum Be- und Entladen einer Bearbeitungsmaschine (2) zum Bearbeiten von Platten (20.1, 20.2),
mit einem Speichersystem (10), welches einen ersten Speicherplatz (15) für zu bearbeitende Platten (20.1, 20.2) und einen zweiten Speicherplatz (16) für die von der Bearbeitungsmaschine (2) bearbeiteten Platten (21.1, 21.2, 21.3, 21.4) umfasst,
mit einer Transporteinrichtung (30) zum Transportieren der zu bearbeitenden Platten und zum Transportieren der bearbeiteten Platten zwischen dem Speichersystem (10) und der Bearbeitungsmaschine (2), welche Transporteinrichtung (30)
mindestens einen Wechseltisch (31, 32) für mindestens eine zu bearbeitende Platte (20.1, 20.2) oder eine bearbeitete Platte (21.1, 21.2, 21.3, 21.4) und
eine Beladevorrichtung (40) zum Beladen des Wechseltischs (31, 32) und eine Entladevorrichtung (50) zum Entladen des Wechseltischs (31, 32) umfasst,
wobei der jeweilige Wechseltisch (31, 32) zwischen dem Speichersystem (10) und der Bearbeitungsmaschine (2) transportierbar und jeweils an einen Ladeplatz (35) und an einen Entladeplatz (36) bringbar ist,
die Beladevorrichtung (40) dazu ausgebildet ist, eine zu bearbeitende Platte (20.1, 20.2) vom ersten Speicherplatz (15) zu entfernen und an dem Ladeplatz (35) auf dem jeweiligen Wechseltisch (31, 32) zu deponieren,
und die Entladevorrichtung (50) dazu ausgebildet ist, eine bearbeitete Platte (21.1, 21.2, 21.3, 21.4) am Entladeplatz (36) vom jeweiligen Wechseltisch (31, 32) zu entfernen und auf dem zweiten Speicherplatz (16) zu deponieren, sowie
der erste Speicherplatz über oder unter dem zweiten Speicherplatz angeordnet ist, und
der Entladeplatz (36) des jeweiligen Wechseltischs (31, 32) in einem Bereich über dem zweiten Speicherplatz (16) vorgesehen ist,
**dadurch gekennzeichnet, dass**
eine auf dem jeweiligen Wechseltisch (31, 32) deponierte Platte (21.1, 21.2, 21.3, 21.4) am Entladeplatz (36) mittels der Entladevorrichtung (50) erfassbar, vom Wechseltisch separierbar und nach Entfernen des Wechseltisches auf dem zweiten Speicherplatz (16) deponierbar ist.

2. Vorrichtung nach Anspruch 1, wobei die Beladevorrichtung (40) oder die Entladevorrichtung (50) zum Erfassen der jeweiligen Platte ein Gabelsystem (51) mit einer Gabel (52) oder ein Doppelgabelsystem mit zwei Gabeln oder ein Saugsystem (42) umfasst.

3. Vorrichtung nach Anspruch 1 oder 2, wobei der jeweilige Wechseltisch (31, 32) zwischen dem Speichersystem (10) und der Bearbeitungsmaschine (2) auf mindestens einem Weg transportierbar ist, der über einen Wechseltisch-Wechsler (60) mit mindestens zwei Führungsbahnen (34.2, 34.3) für jeweils mindestens einen Wechseltisch (31, 32) führt, wobei der jeweilige Weg des Wechseltischs wahlweise über eine der Führungsbahnen (34.2, 34.3) des Wechseltisch-Wechslers (60) führt.

4. Vorrichtung nach Anspruch 3, wobei der Ladeplatz (35) des jeweiligen Wechseltischs (31, 32) an einer der Führungsbahnen (34.2, 34.3) des Wechseltisch-Wechslers (60) vorgesehen ist.

5. Vorrichtung nach einem der Ansprüche 3 oder 4, wobei der jeweilige Wechseltisch (31, 32) entlang einer Führung (34.1, 34.2, 34.3, 34.4, 34.5) bewegbar ist, welche - von der Bearbeitungsmaschine (2) aus gesehen - über den Wechseltisch-Wechsler (60) hinaus zu einem Parkplatz (70) für den Wechseltisch (31, 32) führt.

6. Vorrichtung nach Anspruch 5, wobei an dem Parkplatz (70) der jeweilige Wechseltisch (31, 32) von der Führung (34.5) entfernbar ist und/oder ein von der Führung entfernter Wechseltisch derart in Kontakt mit der Führung (34.5) bringbar ist, dass er entlang der Führung bewegbar ist.

7. Vorrichtung nach einem der Ansprüche 5 oder 6, wobei die Führung (34.4) zwischen dem Wechseltisch-Wechsler (60) und dem Parkplatz (70) oberhalb eines der Speicherplätze (16) vorbeiführt.

8. Vorrichtung nach einem der Ansprüche 5 bis 7, wobei,
wenn der Wechseltisch (31, 32) sich im Bereich des Parkplatzes (70) befindet, ein Rost (33) oder einen Einsatz oder eine Auflage zur Ablage von mindestens einer der Platten
am jeweiligen Wechseltisch (31, 32) installierbar oder
vom Wechseltisch entfernbar oder
am Wechseltisch auswechselbar ist.

9. Vorrichtung nach einem der Ansprüche 1 bis 8, wobei
eine der bearbeiteten Platten (21.1, 21.2, 21.3, 21.4) eine in Einzelteile zerlegte Platte ist und eine Teilmenge der Einzelteile (25) mit der Beladevorrichtung (40) oder der Entladevorrichtung (50) erfassbar und von den übrigen Einzelteilen separierbar ist.

10. Vorrichtung nach Anspruch 9, wobei
die separierten Einzelteile (25) auf einem dritten Speicherplatz (17) mittels der Beladevorrichtung (40) oder der Entladevorrichtung (50) deponierbar sind.

11. Vorrichtung nach Anspruch 10, wobei der dritte Speicherplatz (17) über oder unter dem ersten Speicherplatz (15) oder
über oder unter dem zweiten Speicherplatz (16) oder
zwischen dem ersten Speicherplatz (15) und dem zweiten Speicherplatz (16) angeordnet ist.

12. Bearbeitungsmaschine (2) zum Bearbeiten von Platten (20.1, 20.2) mit einer Vorrichtung (10, 30, 60) zum Be- und Entladen der Bearbeitungsmaschine (2) nach einem der Ansprüche 1 bis 11.

13. Bearbeitungsmaschine nach Anspruch 12, wobei die Bearbeitungsmaschine zum Schneiden von Platten mit einem Schneidwerkzeug und/oder mit mindestens einem Laserstrahl ausgebildet ist.

14. Verfahren zum Be- und Entladen einer Bearbeitungsmaschine (2) zum Bearbeiten von Platten (20.1, 20.2), wobei mindestens ein Wechseltisch (31, 32) zwischen der Bearbeitungsmaschine (2) und einem ersten Speicherplatz (15) für zu bearbeitende Platten (20.1, 20.2) und einem zweiten Speicherplatz (16) für bearbeitete Platten (21.1, 21.2, 21.3, 21.4) transportiert wird, welches Verfahren mindestens die folgenden Schritte A und B umfasst:
(A) Zum Beladen der Bearbeitungsmaschine (2) wird der jeweilige Wechseltisch (31, 32) mit mindestens einer zu bearbeitenden Platte (20.1, 20.2) beladen, wobei die jeweilige Platte von dem ersten Speicherplatz (15) separiert und auf dem Wechseltisch (31, 32) deponiert wird, und der Wechseltisch wird zusammen mit der jeweils zu bearbeitenden Platte zur Bearbeitungsmaschine (2) transportiert;
(B) zum Entladen der Bearbeitungsmaschine wird der jeweilige Wechseltisch (31, 32) zusammen mit mindestens einer bearbeiteten Platte (21.1, 21.2, 21.3, 21.4) von der Bearbeitungsmaschine (2) zum zweiten Speicherplatz (16) transportiert und anschliessend entladen, wobei der Wechseltisch (31, 32) zusammen mit der jeweiligen Platte (21.1, 21.2, 21.3, 21.4) an einen Entladeplatz (36) in einem Bereich über dem zweiten Speicherplatz (16) transportiert und die jeweilige bearbeitete Platte vom Wechseltisch separiert und auf dem zweiten Speicherplatz deponiert wird,
**dadurch gekennzeichnet, dass**
eine auf dem jeweiligen Wechseltisch (31, 32) deponierte Platte (21.1, 21.2, 21.3, 21.4) am Entladeplatz (36) erfasst und von dem Wechseltisch (31, 32) separiert wird, bevor der Wechseltisch (31, 32) aus einem Zwischenraum zwischen der jeweiligen Platte (21.4) und dem zweiten Speicherplatz (16) entfernt wird und die Platte (21.4) anschliessend auf dem zweiten Speicherplatz (16) deponiert wird.

## Claims

1. A device for the loading and unloading of a processing machine (2) for the processing of panels (20.1, 20.2),
with a storage system (10), which comprises a first storage position (15) for the panels to be processed (20.1, 20.2) and a second storage position (16) for the panels (21.1, 21.2, 21.3, 21.4) processed by the processing machine (2),
with a transporting arrangement (30) for transporting the panels to be processed and for transporting the processed panels between the storage system (10) and the processing machine (2), said transporting arrangement (30) comprising
at least one change-over table (31, 32) for at least one panel to be processed (20.1, 20.2) or a processed panel (21.1, 21.2, 21.3, 21.4) and
a loading device (40) for loading the change-over table (31, 32) and an unloading device (50) for unloading the change-over table (31, 32),
wherein the respective change-over table (31, 32) can be transported between the storage system (10) and the processing machine (2) and can be brought respectively to a loading position (35) and an unloading position (36),
the loading device (40) is designed to remove a panel to be processed (20.1, 20.2) from the first storage position (15) and to deposit the same at the loading position (35) on the respective change-over table (31, 32),
and the unloading device (50) is designed to remove a processed panel (21.1, 21.2, 21.3, 21.4) at the unloading position (36) from the respective change-over table (31, 32) and to deposit the same on the second storage position (16), and
the first storage position is disposed above or below the second storage position, and
the unloading position (36) of the respective change-over table (31, 32) is provided in a region above the second storage position (16),
**characterised in that**
a panel (21.1, 21.2, 21.3, 21.4) deposited on the respective change-over table (31, 32) can be engaged at the unloading position (36) by means of the unloading device (50), can be separated from the change-over table and can be deposited on the second storage position (16) after removal of the change-over table.

2. The device according to claim 1, wherein the loading device (40) or the unloading device (50) comprises, for the engagement of the respective panel, a fork system (51) with a fork (52) or a double-fork system with two forks or a suction system (42).

3. The device according to claim 1 or 2, wherein the respective change-over table (31, 32) can be transported between the storage system (10) and the processing machine (2) on at least one path, which passes via a change-over table changer (60) with at least two guide-ways (34.2, 34.3) for in each case at least one change-over table (31, 32), the respective path of the change-over table optionally passing via one of the guide-ways (34.2, 34.3) of the change-over table changer (60).

4. The device according to claim 3, wherein the loading position (35) of the respective change-over table (31, 32) is provided on one of the guide-ways (34.2, 34.3) of the change-over table changer (60).

5. The device according to any one of claims 3 or 4, wherein the respective change-over table (31, 32) can be moved along a guide (34.1, 34.2, 34.3, 34.4, 34.5), which - as viewed from the processing machine (2) - passes beyond the change-over table changer (60) to a parking position (70) for the change-over table (31, 32).

6. The device according to claim 5, wherein, in the parking position (70), the respective change-over table (31, 32) can be removed from the guide (34.5) and/or a change-over table removed from the guide can be brought into contact with the guide (34.5) in such a way that it can be moved along the guide.

7. The device according to any one of claims 5 or 6, wherein the guide (34.4) passes by between the change-over table changer (60) and the parking position (70) above one of the storage positions (16).

8. The device according to any one of claims 5 to 7, wherein, when the change-over table (31, 32) is located in the region of the parking position (70), a grate (33) or an insertion or a support for the deposition of at least one of the panels
can be installed on the respective change-over table (31, 32) or can be removed from the change-over table or
can be replaced on the change-over table.

9. The device according to any one of claims 1 to 8, wherein one of the processed panels (21.1, 21.2, 21.3, 21.4) is a panel split into individual parts and a partial quantity of individual parts (25) can be engaged by the loading device (40) or the unloading device (50) and separated from the remaining individual parts.

10. The device according to claim 9, wherein the separated individual parts (25) can be deposited on a third storage position (17) by means of the loading device (40) or the unloading device (50).

11. The device according to claim 10, wherein the third storage position (17) is disposed above or below the first storage position (15) or
above or below the second storage position (16) or between the first storage position (15) and at the second storage position (16).

12. A processing machine (2) for the processing of panels (20.1, 20.2) with a device (10, 30, 60) for the loading and unloading of the processing machine (2) according to any one of claims 1 to 11.

13. The processing machine according to claim 12, wherein the processing machine is designed for the cutting of panels with a cutting tool and/or with at least one laser beam.

14. A method for the loading and unloading of a processing machine (2) for the processing of panels (20.1, 20.2), wherein at least one change-over table (31, 32) is transported between the processing machine (2) and a first storage position (15) for panels to be processed (20.1, 20.2) and a second storage position (16) for processed panels (21.1, 21.2, 21.3, 21.4), said method comprising at least the following steps A and B:
(A) For the loading of the processing machine (2), the respective change-over table (31, 32) is loaded with at least one panel to be processed (20.1, 20.2), wherein the respective panel is separated from the first storage position (15) and deposited on the change-over table (31, 32), and the change-over table is transported together with the panel respectively to be processed to the processing machine (2);
(B) For the unloading of the processing machine, the respective change-over table (31, 32) is transported together with at least one processed panel (21.1, 21.2, 21.3, 21.4) from the processing machine (2) to the second storage position (16) and is then unloaded, the change-over table (31, 32) being transported together with the respective panel (21.1, 21.2, 21.3, 21.4) to an unloading position (36) in a region above the second storage position (16) and the respective processed panel being separated from the change-over table and deposited on the second storage position,
**characterised in that**
a panel (21.1, 21.2, 21.3, 21.4) deposited on the respective change-over table (31, 32) is engaged at the unloading position (36) and separated from the change-over table (31, 32), before the change-over table (31, 32) is removed from an intermediate space between the respective panel (21.4) and the second storage position (16) and the panel (21.4) is then deposited on the second storage position (16).

## Revendications

1. Dispositif pour le chargement et le déchargement d'une machine de traitement (2) pour le traitement de panneaux (20.1, 20.2),
comprenant un système de stockage (10), lequel comporte un premier emplacement de stockage (15) pour des panneaux (20.1, 20.2) à traiter et un second emplacement de stockage (16) pour les panneaux (21.1, 21.2, 21.3, 21.4) traités par la machine de traitement (2),
un dispositif de transport (30) pour le transport des panneaux à traiter et pour le transport des panneaux traités entre le système de stockage (10) et la machine de traitement (2), lequel dispositif de transport (30)
comporte au moins une table interchangeable (31, 32) pour au moins un panneau (20.1, 20.2) à traiter ou un panneau (21.1, 21.2, 21.3, 21.4) traité et
un dispositif de chargement (40) pour le chargement de la table interchangeable (31, 32) et un dispositif de déchargement (50) pour le déchargement de la table interchangeable (31, 32),
la table interchangeable (31, 32) respective pouvant être transportée entre le système de stockage (10) et la machine de traitement (2) et pouvant être amenée à chaque fois à un emplacement de chargement (35) et à un emplacement de déchargement (36),
le dispositif de chargement (40) étant conçu pour enlever un panneau (20.1, 20.2) à traiter du premier emplacement de stockage (15) et le déposer à l'emplacement de chargement (35) sur la table interchangeable (31, 32) respective,
et le dispositif de déchargement (50) étant conçu pour enlever un panneau (21.1, 21.2, 21.3, 21.4) traité à l'emplacement de déchargement (36) de la table interchangeable (31, 32) respective et le déposer sur le second emplacement de stockage (16), et
le premier emplacement de stockage étant disposé au-dessus ou au-dessous du second emplacement de stockage, et
l'emplacement de déchargement (36) de la table interchangeable (31, 32) respective étant prévu dans une zone au-dessus du second emplacement de stockage (16),
**caractérisé en ce qu'**
un panneau (21.1, 21.2, 21.3, 21.4) déposé sur la table interchangeable (31, 32) respective peut être saisi à l'emplacement de déchargement (36) au moyen du dispositif de déchargement (50), peut être séparé de la table interchangeable et être déposé sur le second emplacement de stockage (16) après l'enlèvement de la table interchangeable.

2. Dispositif selon la revendication 1, le dispositif de chargement (40) ou le dispositif de déchargement (50) comprenant pour la saisie du panneau respectif un système de fourche (51) avec une fourche (52) ou un système à double fourche avec deux fourches ou un système aspirant (42).

3. Dispositif selon la revendication 1 ou 2, la table interchangeable (31, 32) respective pouvant être transportée entre le système de stockage (10) et la machine de traitement (2) sur au moins un trajet qui passe par un changeur de table interchangeable (60) avec au moins deux pistes de guidage (34.2, 34.3) prévues chacune pour au moins une table interchangeable (31, 32), le trajet respectif de la table interchangeable passant en option par l'une des pistes de guidage (34.2, 34.3) de l'échangeur de table interchangeable (60).

4. Dispositif selon la revendication 3, l'emplacement de chargement (35) de la table interchangeable (31, 32) respective étant prévu sur l'une des bandes de guidage (34.2, 34.3) du changeur de table interchangeable (60).

5. Dispositif selon l'une quelconque des revendications 3 ou 4, la table interchangeable (31, 32) respective pouvant être déplacée le long d'un guide (34.1, 34.2, 34.3, 34.4, 34.5), lequel aboutit, vu à partir de la machine de traitement (2), au-delà du changeur de table interchangeable (60) à un emplacement de stationnement (70) pour la table interchangeable (31, 32).

6. Dispositif selon la revendication 5, la table interchangeable (31, 32) respective pouvant être enlevée du guide (34.5) sur l'emplacement de stationnement (70) et/ou une table interchangeable enlevée du guide pouvant être amenée en contact avec le guide (34.5) de telle sorte qu'il peut être déplacé le long du guide.

7. Dispositif selon l'une quelconque des revendications 5 ou 6, le guide (34.4) passant entre le changeur de table interchangeable (60) et l'emplacement de stationnement (70) au-dessus d'un des emplacements de stockage (16).

8. Dispositif selon l'une quelconque des revendications 5 à 7, une grille (33) ou un insert ou un support pour la dépose d'au moins l'un des panneaux pouvant être installé sur la table interchangeable (31, 32) respective ou pouvant être enlevé de la table interchangeable ou pouvant être remplacé sur la table interchangeable lorsque la table interchangeable (31, 32) se trouve dans la zone de l'emplacement de stationnement (70).

9. Dispositif selon l'une quelconque des revendications 1 à 8, l'un des panneaux (21.1, 21.2, 21.3, 21.4) traités étant un panneau démonté en pièces individuelles et une quantité partielle des pièces individuelles (25) pouvant être saisie avec le dispositif de chargement (40) ou le dispositif de déchargement (50) ou pouvant être séparée des autres pièces individuelles.

10. Dispositif selon la revendication 9, les pièces individuelles (25) séparées pouvant être déposées sur un troisième emplacement de stockage (17) au moyen du dispositif de chargement (40) ou du dispositif de déchargement (50).

11. Dispositif selon la revendication 10, le troisième emplacement de stockage (17) étant disposé au-dessus ou au-dessous du premier emplacement de stockage (15) ou
au-dessus ou au-dessous du second emplacement de stockage (16) ou entre le premier emplacement de stockage (15) et le second emplacement de stockage (16).

12. Machine de traitement (2) pour le traitement de panneaux (20.1, 20.2) avec un dispositif (10, 30, 60) pour le chargement et le déchargement de la machine à traitement (2) selon l'une quelconque des revendications 1 à 11.

13. Machine à traitement selon la revendication 12, la machine de traitement étant conçue pour la découpe de panneaux avec un outil de coupe et/ou avec au moins un faisceau laser.

14. Procédé pour le chargement et le déchargement d'une machine de traitement (2) pour le traitement de panneaux (20.1, 20.2), au moins une table interchangeable (31, 32) étant transportée entre la machine de traitement (2) et un premier emplacement de stockage (15) pour des panneaux (20.1, 20.2) à traiter et un second emplacement de stockage (16) pour des panneaux (21.1, 21.2, 21.3, 21.4) traités, lequel procédé comporte au moins les étapes A et B suivantes :
(A) Pour le chargement de la machine de traitement (2), la table interchangeable (31, 32) respective est chargée avec au moins un panneau (20.1, 20.2) à traiter, le panneau respectif étant séparé du premier emplacement de stockage (15) et étant déposé sur la table interchangeable (31, 32), et la table interchangeable est transportée conjointement avec le panneau respectif à traiter à la machine de traitement (2) ;
(B) Pour le déchargement de la machine de traitement, la table interchangeable (31, 32) respective est transportée conjointement avec au moins un panneau (21.1, 21.2, 21.3, 21.4) traité de la machine de traitement (2) au second emplacement de stockage (16) et étant déchargée ensuite, la table interchangeable (31, 32) étant transportée conjointement avec le panneau (21.1, 21.2, 21.3, 21.4) respectif à un emplacement de déchargement (36) dans une zone au-dessus du second emplacement de stockage (16) et le panneau traité respectif étant séparé de la table interchangeable et étant déposé sur le second emplacement de stockage,
**caractérisé en ce que**
un panneau (21.1, 21.2, 21.3, 21.4) déposé sur la table interchangeable (31, 32) respective est saisi sur l'emplacement de déchargement et est séparé de la table interchangeable (31, 32), avant que la table interchangeable (31, 32) soit enlevée d'un espace intermédiaire entre le panneau (21.4) respectif et le second emplacement de stockage (16) et le panneau (21.4) est déposé ensuite sur le second emplacement de stockage (16).
